# EUROPEAN PATENT APPLICATION

(11) **EP 3 037 959 A1**
(43) Date of publication of application: **29.06.2016**
(21) Application number: 15202793.4
(22) Date of filing: 30.06.2009
(51) Int. Cl.: G06F 9/44

(54) **CONTROLLER DEVELOPMENT TOOL AND MOTOR DRIVE SYSTEM DEVELOPED BY THE TOOL**

(30) Priority: 30.06.2008 JP 2008169764
(62) Divisional of application: 09164092.0
(71) Applicant: Hitachi, Ltd., Tokyo 100-8280 (JP)
(72) Inventor: KAWABATA, Yukio, Tokyo, 100-8220 (JP)
(74) Representative: MERH-IP Matias Erny Reichl Hoffmann Patentanwälte PartG mbB

(57) **Abstract**

Usability and productivity are improved in auto-coding to implement model-based development. A controller development tool for creating a source code to implement processing represented by a model includes an interface (1, 2, 3, 8) for describing the model as a library model (8A) including a combination of blocks capable of creating a source code, creating the source code through scaling management (8B) for the controller, and combining the source code with a plurality of functions to produce a source file (4, FIG. 9).

## Description

### BACKGROUND OF THE INVENTION

The present invention relates to a built-in software development environment and an apparatus in which software developed in the development environment is implemented.

According to the prior art, for example, JP-A-2005-332333, there exists a case in which for a program of a vehicle engine ECU (Engine Control Unit), the program developer does not directly prepare a source code of the program, but describes each function of the target program in the form of "model" which facilitates creation of the function and which is superior in visibility. The program developer inputs the prepared model to a personal computer or the like in which a program development environment corresponding to the model has been implemented, to automatically create a source code of the program function. The program which implements the function to create a source code based on a model is called a code creation tool and is incorporated in the model development environment in many cases. The program development to create a source code from a model is called a model-based development. The source code automatically created from a model is called an auto-code, and this operation is called auto-coding.

The program development environment corresponding to the model-based development is, for example, MATLAB (registered trademark) of MathWorks (registered trademark). In MATLAB, the user (developer) describes a model of a target program by use of Simulink (registered trademark) which is a function of MATLAB. The model is described using a block which is a functional unit and a link which indicates an input and output relationship between functional units. That is, the model is described in the form of combinations of blocks and links. In other words, the model is a set including a plurality of blocks coupled via links with each other.

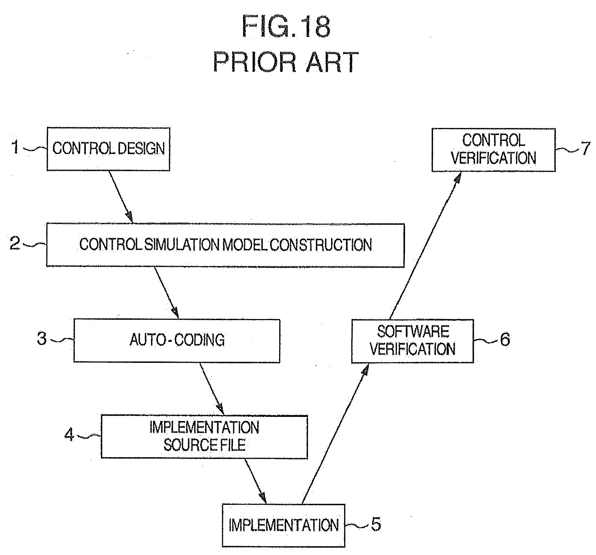

FIG. 18 shows a flow and a development process of a V-shaped development according to the prior art.

The auto-code essential to the model-based development is used to automatically create software based on a model. To create the auto-code, high skills are required for a control design to prepare a model, a software design to generate software using the model, and a use of the program development environment to implement the auto-code.

However, quite a long period of time is required to master these skills.

In the US 2008/00867005 A1, there is disclosed a translator tool in order to convert Simulink models to NuSMV models and corresponding code. The converted Simulink model can then be checked by a NuSMV model checker tool to find model inconsistencies. However, the model translation system combined with the NuSMV model checker tool does not offer a possibility to easily adapt implementations of the Simulink model to different implementation environments (software design and software implementation), as the said combination is restricted to translation and verification of the translated model.

### SUMMARY OF THE INVENTION

There exists a problem as follows. When the standard blocks are used for the control design, a high degree of freedom is obtained. However, corrections and modifications are increased in association with the software design and the software implementation. When the specified blocks prepared in consideration of the software design and the software implementation are employed, the degree of freedom is reduced in the control design.

It is therefore an object of the present invention to solve the problem to improve productivity of the control software.

When usability is not equally divided between the control design and the software implementation or between the software design and the software implementation, the danger of quality deterioration increases due to influence of individual skills of the engineers associated with the respective processes.

An object of the present invention is to solve the problem to suppress the deterioration in quality of the control software.

To achieve the above objects according to the present invention, there are disposed an interface unit including a library model of which setting is changeable, scaling management to manage the library model, and packaging. The interface unit satisfies both of the degree of freedom in the control design and restrictions in the scaling and packaging in the software design and the software implementation.

According to exemplary aspects, a controller development tool for creating a source code to implement processing represented by a model may be provided.

The controller development tool may comprise: interface means for describing the model as a library model including a combination of blocks capable of creating a source code, creating the source code through scaling management for the controller, and combining the source code with a plurality of functions to produce a source file.

According to preferred aspects, information required for simulation and information required for the creation of the source code may be separately arranged on an operation window of the model.

According to preferred aspects, an operation window of the model may include a function for selecting presence or absence of a sign for an output signal.

According to preferred aspects, an operation window of the model may include a function for setting a scaling name of an output signal.

According to preferred aspects, an operation window of the model may include a function for setting scaling of an output signal and an amount of carry for a scaling name of the output signal.

According to preferred aspects, an operation window of the model may include a function for selecting a scaling name of an output signal by use of a pulldown menu.

According to preferred aspects, the operation window of the model may include a function for displaying a scale value of the selected scaling name of the output signal.

According to preferred aspects, an operation window of the model may include a function for setting a scaling name, presence or absence of a sign, "16 bits", and a scaling value which are to be set to the model.

According to preferred aspects, an operation window of the model may include a function for acquiring a numeric value name, a numeric value, a scale name, a scale value, description information, a storage class, and information of a model path which have been set to the model.

According to preferred aspects, an operation window of the model may include a function for creating the source code based on the model, scaling management information, and initial value information for each condition; executing packaging processing for the source code; and outputting the source file.

According to preferred aspects, the model may include a library model in which blocks capable of creating the source code are combined with each other.

According to another exemplary aspect, a controller development tool which creates a source code to implement processing represented by a model may be provided.

The tool may execute a model creation program, a model operation program, a source code creation program, a library model, scaling management, and packaging by use of a computer comprising a CPU, an input unit, and a storage; and information required for simulation and information required for the creation of the source code may be separately arranged on an operation window of the model.

According to preferred aspects, an operation window of the model may include a function for acquiring a numeric value name, a numeric value, a scale name, a scale value, description information, a storage class, and information of a model path which have been set to the model.

According to preferred aspects, an operation window of the model may include a function for creating the source code based on the model, scaling management information, and initial value information for each condition; executing packaging processing for the source code; and then outputting the source file.

According to another exemplary aspect, a motor drive system developed by use of a controller development tool for creating a source code to implement processing represented by a model may be provided. The tool may be comprising interface means for describing the model as a library model including a combination of blocks capable of creating a source code, creating the source code through scaling management for the controller, and combining the source code with a plurality of functions to produce a source file.

According to the software development environment of the present invention, it is possible to improve productivity of the control software and to suppress deterioration in quality of the control software.

### BRIEF DESCRIPTION OF THE DRAWINGS

FIG. 1 is a schematic block diagram showing a flow of a V-shaped development and associated positioning of the present invention (embodiment 1).
FIG. 2 is a block diagram showing structure of a personal computer (embodiment 1).
FIG. 3 is a block diagram showing structure of a personal computer (embodiment 1).
FIG. 4 is an explanatory diagram showing an example of a setting screen of a library model (embodiment 1).
FIG. 5 is an explanatory diagram showing an appearance of the library model and an internal model and a setting screen of the model (embodiment 1).
FIGS. 6A and 6B are explanatory diagrams showing an example of a control model created by using a library model (embodiment 1).
FIG. 7 is an explanatory diagram showing an example of a setting screen for a scaling management tool (embodiment 1).
FIG. 8 is an explanatory diagram showing an example of a concept of packaging operation (embodiment 1).
FIG. 9 is an explanatory diagram showing an example of a source file to be implemented (embodiment 1).
FIG. 10 is an explanatory diagram showing an example of information pieces extracted from a library model and blocks and packaging information (embodiment 1).
FIG. 11 is an explanatory diagram showing an example of a list of information pieces extracted from the library model and the blocks (embodiment 1).
FIG. 12 is an explanatory diagram showing another example of a concept of packaging operation (embodiment 1).
FIG. 13 is an explanatory diagram showing another example of a concept of packaging operation (embodiment 1).
FIG. 14 is an explanatory diagram showing another example of a concept of packaging operation (embodiment 1).
FIG. 15 is an explanatory diagram showing another example of a concept of packaging operation (embodiment 1).
FIG. 16 is an explanatory diagram showing another example of a concept of packaging operation (embodiment 1).
FIG. 17 is an explanatory diagram showing another example of a concept of packaging operation (embodiment 1).
FIG. 18 is a flow of a V-shaped development and a development process according to the prior art.

### EXEMPLARY DESCRIPTION OF THE EMBODIMENTS

An exemplary description will now be given of aspects of the present invention. Specifically, in the following, preferred aspects and exemplary embodiments will be described in more detail with reference to the accompanying figures. Same or similar features in different drawings and embodiments are sometimes referred to by similar reference numerals. It is to be understood that the detailed description below relating to various preferred aspects and preferred embodiments are not to be meant as limiting the scope of the present invention.

The controller development tool of the present invention is a controller development tool to create a source code which implements processing represented by a model, and includes an interface unit. In the interface unit, a model is described as a library model including a combination of blocks capable of creating a source code. The source code is created through scaling management for the controller and is combined with a plurality of functions into a source file.

On an operation window of the model, information pieces for simulation and information pieces for creation of a source code are separately arranged. The operation window is provided with a function to select "presence or absence of sign" for an output signal.

The model operation window has a function to set a scaling name of an output signal, a function to set an amount of carry for the scaling of an output signal, a function to select the scaling of an output signal by use of a pulldown menu, and a function to display a scale value of the scaling of an output signal.

The operation window also has a function to set a scaling name, "presence or absence of sign", "16 bits", and a scaling value to the model and a function to obtain information pieces set to the model such as a numeric value name, a numeric value, a scale name, a scale value, description information, a storage class, and model path information.

According to an aspect of the present invention, there is provided a function to generate a source code based on a model, scaling management information, and initial value information for each condition. By executing packaging processing for the source code, a source file is produced for implementation thereof. The model includes a library model including blocks capable of creating a source code.

According to an aspect of the present invention, there is provided a controller development tool which executes a model creation program, a model operation program, a source code creation program, a library model, scaling management, and packaging by use of a computer including a display, a Central Processing Unit (CPU), an input unit, and a storage. This resultantly creates a source code which implement processing represented by a model. On an operation window of the model, information items required for simulation and information items required for the source code creation are separately arranged.

According to an aspect of the present invention, there is provided an apparatus developed by use of the controller development tool, specifically, a motor drive system.

Description will now be given in detail of the present invention by referring to the drawings. In embodiments, which will be described later, a motor drive controller is employed as an example of a built-in controller.

### [Embodiment 1]

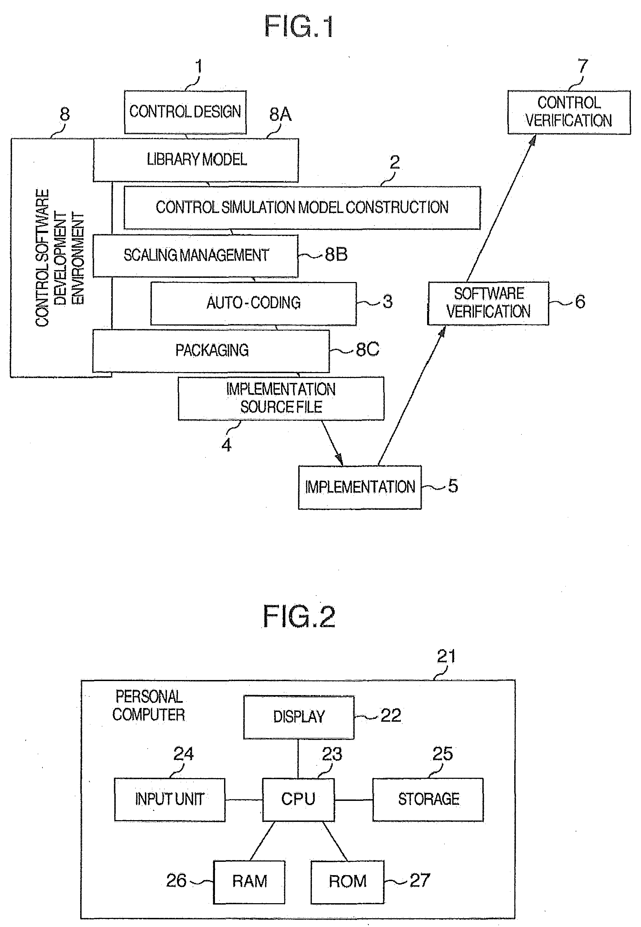

FIG. 1 shows a software development process according to the first embodiment. The software development process of the present invention conducts, after control design 1, control simulation model construction 2 by using a library model 8A included in a control software development environment 8. Thereafter, the software development process conducts scaling required for fixed point arithmetic operation by use of scaling management 8B included in the control software development environment 8. For an auto-code automatically created through auto-coding 3, the software development process conducts packaging 8C to produce an implementation source file 4.

FIG. 2 shows structure of a personal computer 21 to execute the processing described above. The personal computer 21 includes a display 22, a CPU 23, an input unit 24, a storage 25, a Random Access Memory (RAM) 26, and a Read Only Memory (ROM) 27.

The display 22 displays a video image of output information from the CPU 23 to the user (software developer).

When the personal computer 21 is powered, the CPU 23 is activated. The CPU 23 reads a predetermined boot program from the ROM 27, executes the boot program, reads an Operating System (OS) and other programs designated by the boot program from the storage 25, and executes the OS and the programs to execute initiation processing. After the initiation processing, the CPU 23 executes, as a process on the pertinent OS, various programs stored in the storage 25 based on signals from the input unit 24 and a schedule determined by the OS until the power of the personal computer 21 is turned off. In the process of the initiation processing, the CPU 23 receives an input signal from the input unit 24, outputs video signals to the display 22, and controls data reading and writing operations for the RAM 26 and the storage 25 according to necessity.

The input unit 24 includes a keyboard, a mouse, and an audio input module. In response to an operation by the user, the input unit 24 outputs a signal corresponding to the operation to the CPU 23.

The storage 25 is a readable and writable nonvolatile memory and stores various programs as well as a model and a control software development environment, which will be described later.

The RAM 26 is a readable and writable nonvolatile memory and the ROM 27 is a read-only nonvolatile memory.

The RAM 26 is used, when the CPU 23 executes a program stored in the ROM 27 or the storage 25, as a storage area to temporarily save the program or a result of processing and also as a storage area to temporarily save work data.

In the ROM 27, programs and the like which are to be read by the CPU for execution thereof are stored in advance.

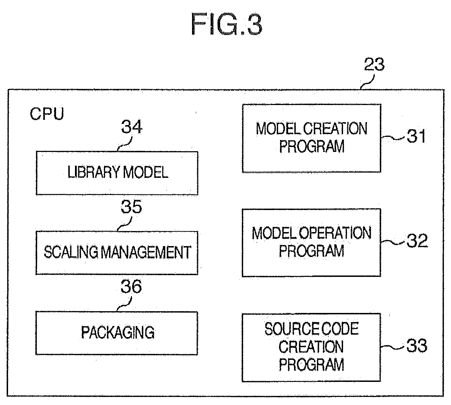

FIG. 3 shows a configuration of programs to be executed by the CPU 23 of the personal computer 21. The CPU 23 executes a model creation program 31, a model operation program 32, a source code creation program 33, a library model 34, scaling management 35, packaging 36, and the like.

In the following description, the operation of the CPU 23 associated with execution of a program is regarded as the operation of the executed program itself.

The model creation program 31 reads the program stored in the storage 25 so that the user creates a model.

A model includes blocks representing outputs of signals and links representing connections of inputs and outputs of signals between the blocks according to a predetermined rule. The model is created using blocks disposed in the model creation program 31 in advance and a model stored in the library model 34, which will be described later. The model is to be stored in the storage 25.

As the model creation program 31, there exists, for example, a program called Simulink (registered trademark) which operates on MATLAB (registered trademark).

The model operation program 32 is a program to operate the created model.

As the model operation program 32, the program called Simulink (registered trademark) which operates on MATLAB (registered trademark) is available.

The source code creation program 33 creates a source code which implements signal processing represented by the created model.

The library model 34 includes models corresponding to the model operation program 32, the source code creation program 33, and the scaling management 35.

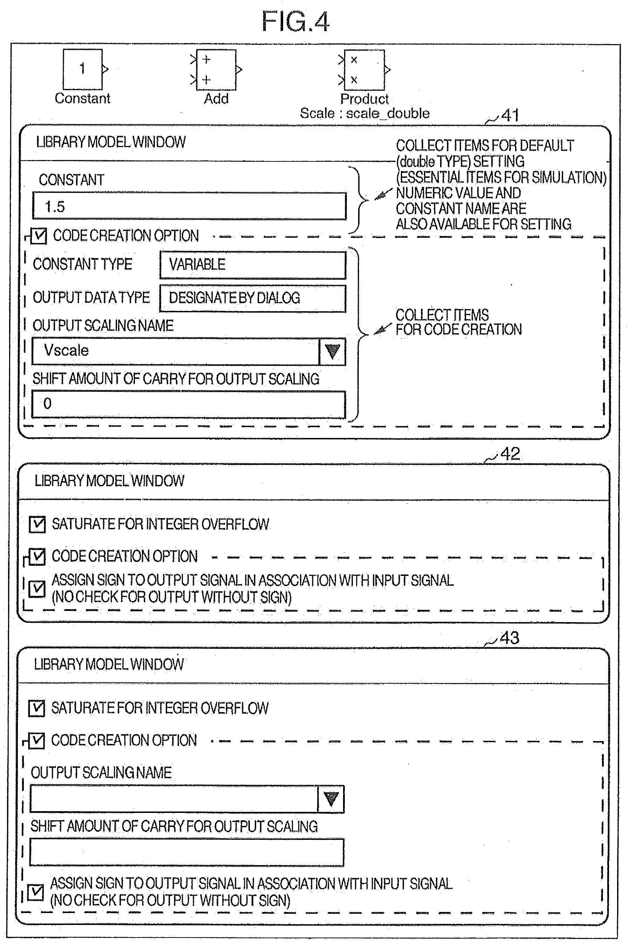

FIG. 4 shows an example of a setting screen 41 of the library model 34. In the setting screen 41, due to a setting condition in which minimum necessary items are to be set and to be changed by the user in the model operation program 32 and minimum necessary items are to be set and to be changed by the user in the source code creation program 33, it is possible to suppress human mistakes associated with individual skills of the engineers.

The setting screen 41 is an example of the library model (Constan) to implement an output of a constant, includes a setting field to set a constant, and has a function to set, in relation to the code creation, a constant type, for example, "constant (ROM)" or "variable (RAM)". This is the setting function for SimulinkParameter and SimulinkSignal in terms of MATLAB. The setting screen also has a function to set as an output data type an output scaling name by use of "takeover by reverse propagation" and "designation by dialog". The screen 41 further has a function in which in orderthat an output is made with high precision (with high resolution) for the output scaling indicated by an output scaling name, "shift amount of carry for output scaling" is set in units of power of two (shift amount). This corresponds to the setting function for NumericType in terms of MATLAB. In addition to the registration function of a new name registration as "output scaling name", there is disposed a function in which if output scaling names have been registered as NumericType, the output scaling names are displayed in a pulldown menu to select one of the names.

Hence, 1) information pieces for simulation and information pieces for creation of a source code are separately arranged, and 2) there is disposed a function to set information required for simulation. Therefore, 3) ROM and RAM information required to create the code and 4) scheduling information required to create the code can be efficiently set and can be confirmed by suppressing human mistakes associated with individual skills of the engineers.

A setting screen 42 is an example of a library model (Add) to achieve an addition. "Saturate at integer overflow" is a function to set a measure to cope with an overflow during an addition. "Assign sign to output signal in association with input signal" is a function to assign a sign to the output scale if either one of input scales (positive or negative numerical values) for the addition is signed. For a situation wherein the output range is restricted by the input range or it is desired to execute processing without signs for convenience of the processing, there is also disposed a function to forcibly set "no sign" to the output scale.

That is, if it is possible that either one input signal takes a negative value, the result of the addition may take a negative value. That is, unless the user particularly changes the setting, if either one input signal is signed, the output signal is automatically signed in consideration of the result of the addition. Even in a case wherein either one input signal may take a negative value, if it is determined that the result of the addition takes only a positive value, the result of the addition can be forcibly outputted without the sign as an output signal according to the setting of the user without changing the model.

A setting screen 43 is an example of a library model (Product) to implement a multiplication. "Saturate at integer overflow" is a function to set a measure to cope with an overflow during a multiplication. "Output scaling name" is a function to designate the scaling defined by the scaling name set as above. "Shift amount of carry for output scaling" is a function to set the amount of scaling shift to adjust resolution of the scaling defined by "output scaling name". "Assign sign to output signal in association with input signal" is a function to assign a sign to the output scale if either one of input scales (positive or negative numerical values) for the multiplication is signed. For a situation wherein the output range is restricted by the input range or it is desired to execute processing without signs for convenience of the processing, there is also disposed a function to forcibly set "no sign" to the output scale. "Output scaling name" is a function disposed, in addition to the registration function of a new name registration, to conduct an operation in which if output scaling names have been registered as NumericType, the output scaling names are displayed in a pulldown menu to select one of the names. Although not shown in the drawings, there is also disposed a function in which when a registered scaling name is selected, the scale values set in association with the selected scaling name such as "presence or absence of sign", "16 bits", and resolution are displayed. There is also disposed a function to change the setting for the selected scaling name on the setting screen.

As a result, for a multiplication between inputs of mutually different scaling values, it is possible to designate output scaling. For an output scaling name, the output scaling can be adjusted with relatively higher operation precision. Hence, the degree of freedom is increased for the output scaling of the multiplication, and a signal can be outputted to a succeeding arithmetic operation with high precision. If it is possible that either one input signal takes a negative value, the result of the multiplication may take a negative value. That is, unless the user particularly changes the setting, if either one input signal is signed, the output signal is automatically signed in consideration of the result of the multiplication. Even in a case wherein either one input signal may take a negative value, if it is determined that the result of the multiplication takes only a positive value, the result of the multiplication can be forcibly outputted without any sign as an output signal according to the setting of the user without changing the model. Since the scaling name can be selected from the pulldown menu of the scaling names, human mistakes such as misspelling of the scaling name are reduced, and operability and productivity can be improved. Since the scale values set in association with the scaling name can be confirmed on the setting screen, visibility and productivity are improved. Since the scale value set in association with the scaling name can be changed on the setting screen, operability and productivity are improved.

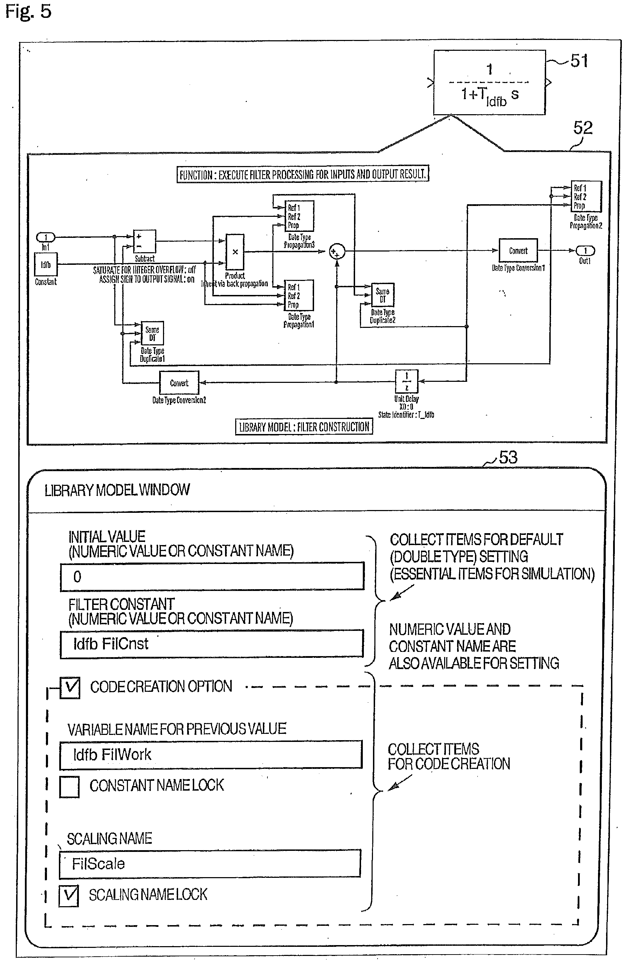

FIG. 5 shows an example of the library model (Filter) to realize a primary delay as well as a library model appearance 51 and an inner model 52 and a setting screen 53 thereof. The library model appearance 51 has a function to display information set in the setting screen 53.

Therefore, the user can obtain the setting information from the library model appearance 51 at a desired point of time without opening the setting screen 53. This improves visibility and workability.

The internal model 52 includes a plurality of blocks or models. In consideration of the source code creation, there exists a block which sets scaling information to one or more locations of a block or a model.

In order that the information set in the setting screen is set as NumericType, SimulinkParameter, and SimulinkSignal information in the blocks of the internal model 52, a program written in the MATLAB language is provided for this purpose. Although the present embodiment uses the MATLAB language, it is also possible to use another program language and an information transmitting unit such that the information set in the setting screen is set to a plurality of blocks.

As a result, the information pieces to be set to a plurality of blocks of the internal model can be collected on the setting screen. Hence, the operation (the job to be manually conducted by the user) to open each block of the internal model is not required. Since the information pieces to be set to the respective blocks of the internal model are collected on the setting screen of the library model, the user can manage the information in a centralized manner. Hence, readability (visibility), maintainability, workability, and productivity of the control model are improved.

Therefore, it is possible to improve the visibility for the user and the visibility and workability for the user, while accommodating the model operation program 32, the source code creation program 33, and the scaling management 35.

That is, the model creation can be conducted in a short period of time by use of the model creation program 31 in a relatively easy way. Due to the correspondence to the source code creation program 33, the source code creation can be securely and efficiently carried out. Due to the correspondence to the scaling management 35, the scaling can be changed without changing the model.

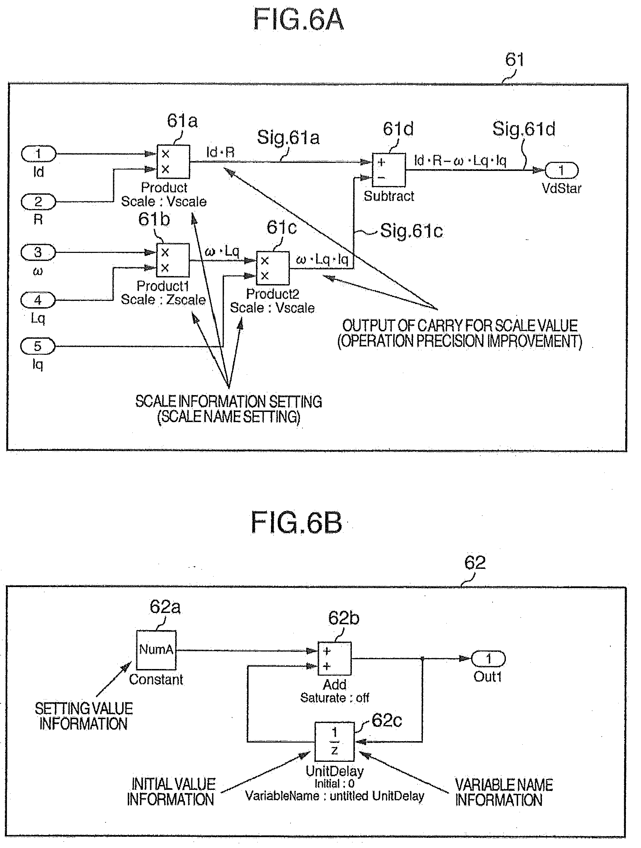

FIGS. 6A and 6B are examples of control models to implement a motor drive system created by use of the library model.

In FIG. 6A, a control model 61 is a model to calculate an output voltage Sig.61d. A multiplication model 61a is employed to calculate a voltage Sig.61a based on a current value and a resistance value. Multiplication models 61b and 61c are employed to calculate a voltage Sig.61c based on an angular velocity value, an inductance value, and a current value. By use of an adder model 61d, the voltage Sig.61a is added to the voltage Sig.61c to produce a voltage Sig.61d as an output voltage.

For the multiplication models 61a to 61c to conduct arithmetic operations in physically different units, scale information pieces (including a scale name) are set in association with the output physical unit. For the outputs from the multiplication models 61a and 61c which are inputs to the addition model 61d, the carry is set to the scale value (scale name). Hence, when the code creation is conducted, the addition model 61d can output an operation result with the operation precision improved for the arithmetic operation. Since the scale information (scale name) is displayed below each model, the user can confirm the information without opening the setting screen. It is accordingly possible to improve visibility, workability, and productivity.

In FIG. 6B, a control model 62 is a model which adds a predetermined value to a previous value to output a result. Specifically, an addition model 62 conducts an addition between a constant model 62a to which a predetermined value is set and a previous value model 62c and outputs a result.

To the constant model 62a, setting information in which a predetermined value is set is set. To the previous value model 62c, initial value information and variable name information when the code creation is conducted are set. Therefore, in addition to numeric values and constant names corresponding to setting value information when the code creation is conducted, values and constant names corresponding to the initial value information and variable names corresponding to the variable name information can be designated. Since the scale information (scale name) is displayed below each model, the user can confirm the information without opening the setting screen. This improves visibility, workability, and productivity.

As above, a control model is constructed by use of a library model beforehand created in consideration of the code creation. The operation can be conducted with high precision. It is possible to prevent increase in the number of information pieces to be set and to improve readability, maintainability, workability, and productivity.

The scaling management provides and manages scaling information for the code creation with the fixed-point or floating-point type when a model is operated by the model operation program 32 and when a source code is created by the source code creation program 33.

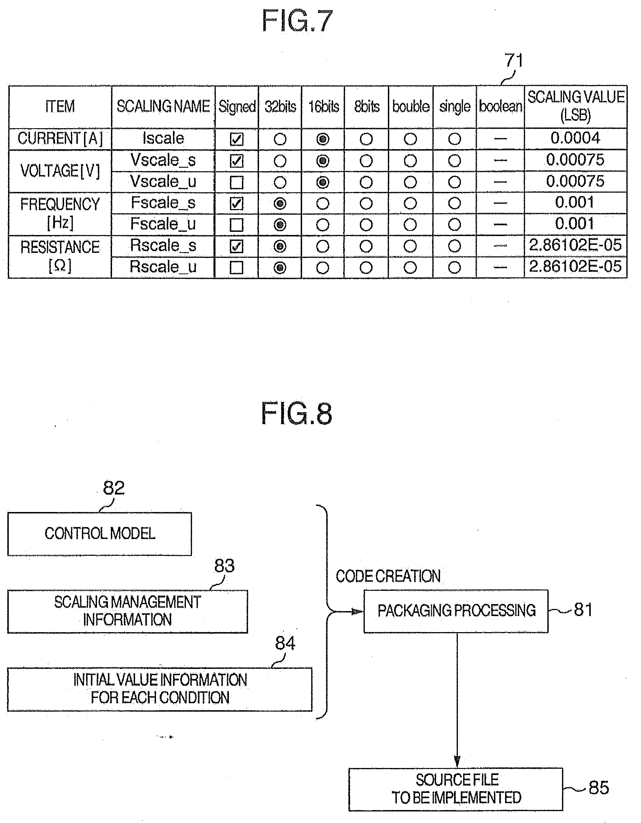

FIG. 7 shows an example of a setting screen 71 of the scaling management 35. The setting screen 71 is employed to set the fixed-point or fixed-point type for the physical quantities (physical units) necessary for the motor drive such as a current, a voltage, a frequency, resistance, and the like. The setting screen 71 is also employed to set and to manage scaling values in the fixed-point arithmetic operation such as "16 bits", "presence or absence of sign", and resolution representing the physical units per bit.

Although not shown, the present embodiment provides a function to change all scaling designations to the floating-point type (double) by use of one button.

It is resultantly possible to manage information necessary for the model operation program 32 and information necessary for the source code creation program 33. By managing these information pieces, visibility and workability are improved for the user. Since the scaling can be comprehensively changed without changingthe model, workability is remarkably improved for the user.

There is disposed a function in which by outputting the information set by the scaling management tool as a script m file and by executing the m file, the scale information such as NumericType may be passed to a model and a block on MATLAB/Simulink.

Hence, the scale values can be comprehensively managed without setting a scale value by opening a model or a block on MATLAB/Simulink and without operating the scale setting screen on MATLAB/Simulink. Accordingly, visibility, operability, workability, and productivity can be remarkably improved for the user.

That is, without changing the created model, a source code suitable for the built-in system of each product can be created by changing the scaling. It is possible to considerably improve reusability, operability, workability, and productivity of the model.

The packaging 36 adds information of initial values included in the model as initialization processing in addition to the source code created by the source code creation program 33, creates initialization processing for each product, and creates initialization processing for each output value of each product.

Operation of the motor drive system varies for each product and for each control operation, for example, in a case wherein the initial values set to the control model are to be reflected when the system is powered or when the inverter or the motor is stopped. Therefore, an optimal source file to be optimally implemented cannot be obtained only by the initialization function of the auto-source code created by MATLAB/Simulink. Hence, in the present embodiment, packaging processing is executed for the auto-source code created by MATLAB/Simulink. The packaging processing includes processing which obtains a source file to be implemented by creating an initialization function to be used when the system is powered and an initialization function to be used when the inverter or the motor is stopped.

FIG. 8 shows an example of the concept of packaging processing. Packaging processing 81 is executed for a control model 82, scaling management information 83, and initial value information 84 for each condition which are created by the user, to create a source file 85 to be implemented.

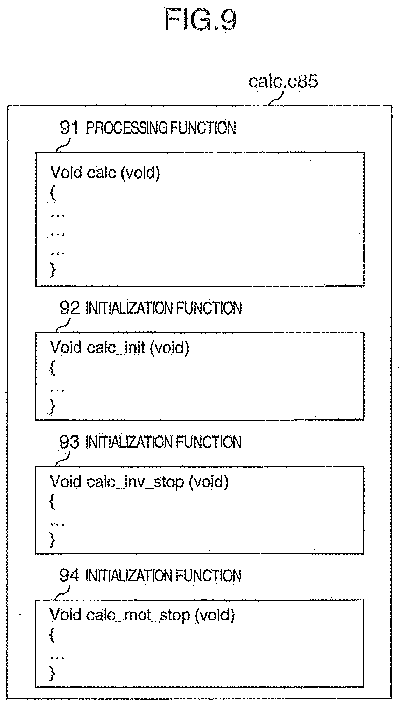

FIG. 9 is an outline of the source file to be implemented, the source file being obtained by executing the packaging processing. The source file includes a processing function 91 indicating operation of the control model, an initialization function 92 to be executed when the system is powered, an initialization function 93 to be executed when the inverter is stopped, and an initialization function 94 to be executed when the motor is stopped.

The source file to be implemented is treated as one module such that each function is called at appropriate timing. It is hence possible to improve usability, workability, and productivity of the software management.

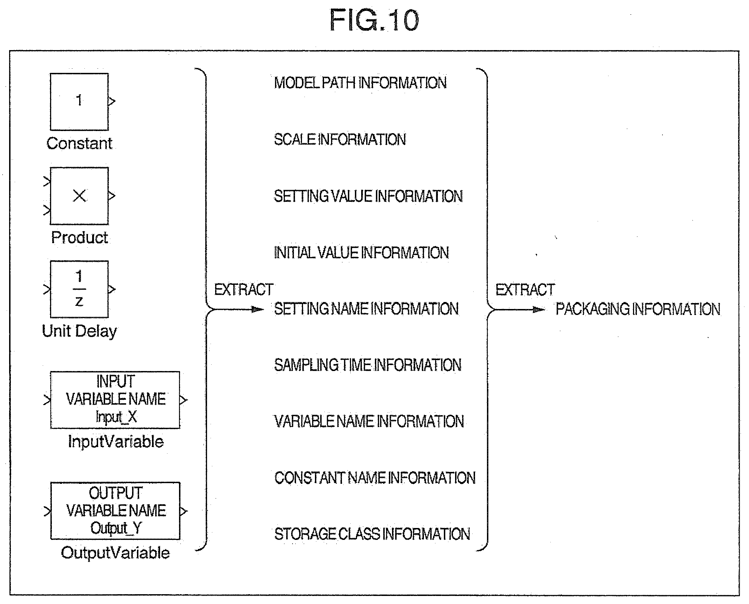

FIG. 10 is an example of information extracted from models and blocks, the models, and the blocks used when an initialization function is created. From each model and each block, information ranging from the model path information to the storage class information set to the library model are extracted. Based on the information pieces, the operation to be processed by the initialization processing is executed by the packaging processing to create an initialization function in the source file to be implemented.

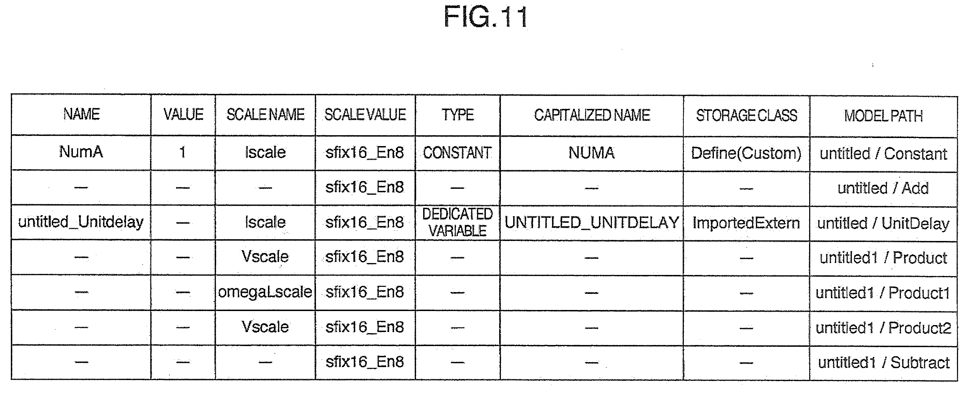

FIG. 11 is an example of extracted information pieces outputted as packaging information in the form of a file. The information pieces are employed in the packaging processing to create a source file to be implemented.

The creation of the source file is carried out through several kinds of processes based on the control model and various information pieces.

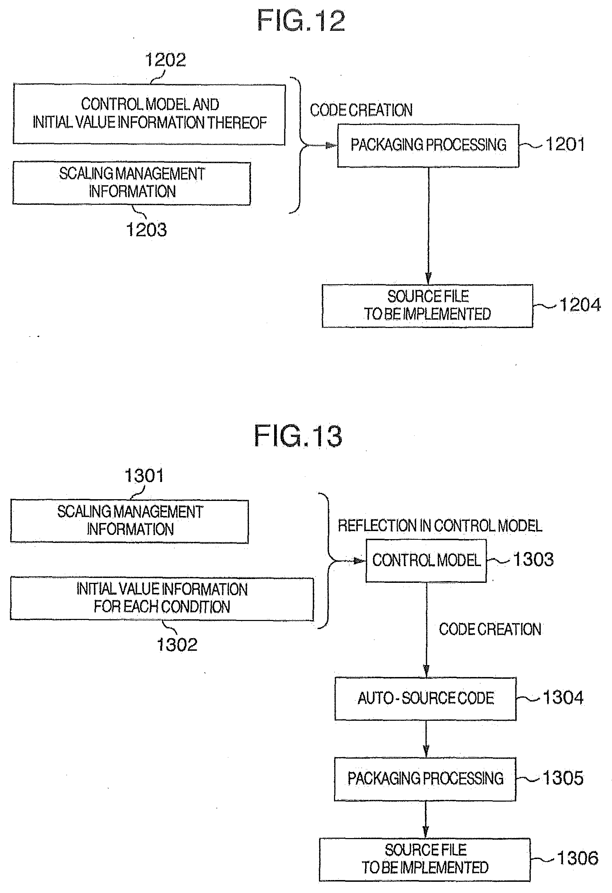

FIG. 12 shows another example of the packaging operation concept. Packaging processing 1201 is executed for a control model and control model initial value information 1202 and scaling management information 1203 created by the user, to create a source file 1204 to be implemented.

FIG. 13 shows still another example of the packaging operation concept. Scaling management information 1301 and the initial value information for each condition 1302 created by the user are reflected in a control model 1303. Thereafter, an auto-source code 1304 is created using the control model. Packaging processing 1305 is executed for the auto-source code 1304 to create a source file 1306 to be implemented.

Resultantly, without changing the control model, the auto-source code is created by changing the code creation condition. The source file is then created by executing the packaging processing for the auto-source code.

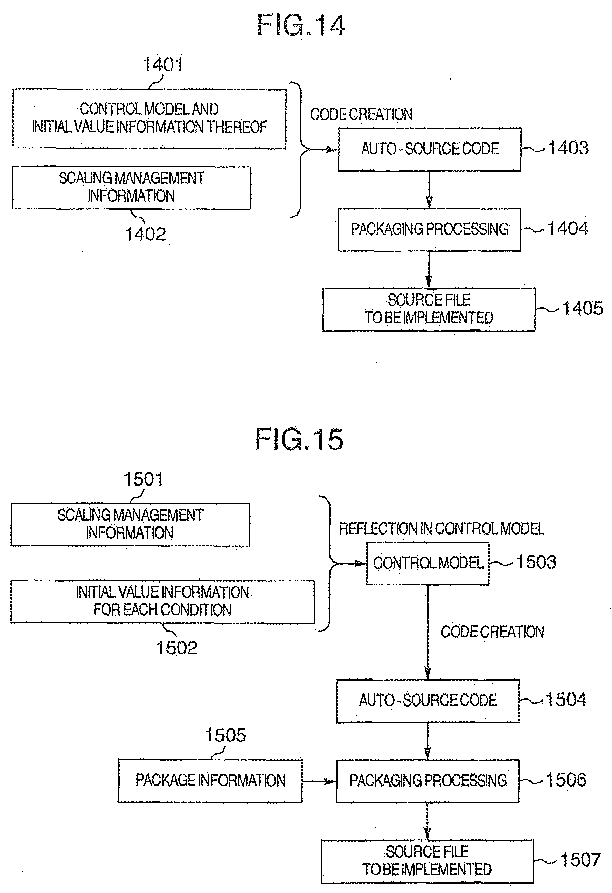

FIG. 14 shows another example of the packaging operation concept. An auto-source code 1403 is created using a control model and the initial value information of the control model 1401 and scaling management information 1402 created by the user. Packaging processing 1404 is executed for the auto-source code 1403 to create a source file 1405 to be implemented.

Hence, without changing the control model and the initial value information of the control model, the auto-source code is created under a different condition by changing the scaling management information. The source file 1405 can be created by executing the packaging processing for the auto-source code.

FIG. 15 shows still another example of the packaging operation concept. Scaling management information 1501 and the initial value information for each condition 1502 created by the user are reflected in a control model 1503. An auto-source code 1504 is then created using the control model. Packaging processing 1506 is executed for the auto-source code 1504 according to packaging information 1505 to create a source file 1507 to be implemented.

As a result, without changing the control model, the auto-source code is created under a different condition by changing the scaling management information and the initial value information. Thereafter, without changing the packaging information processing, the source file can be created under a different packaging condition by changing the packaging information.

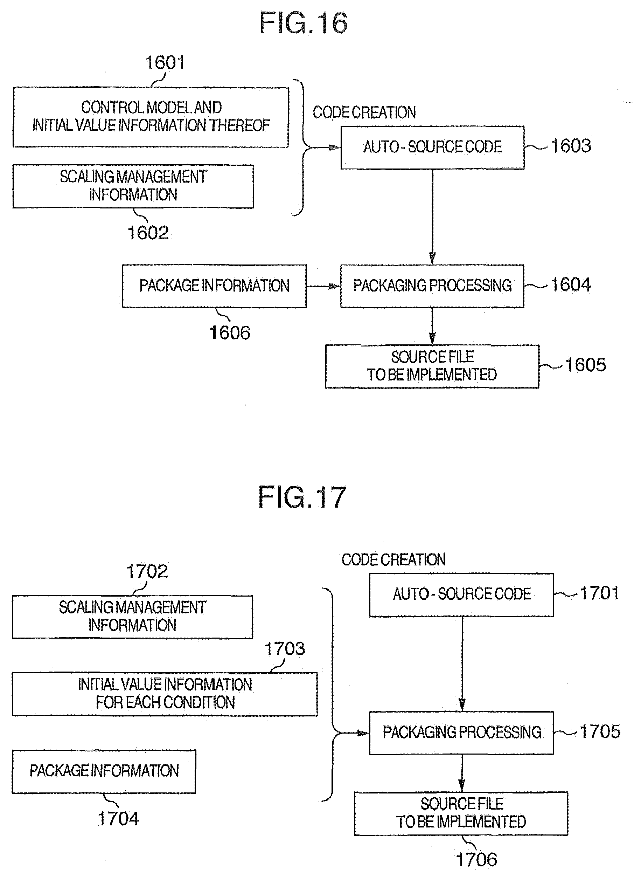

FIG. 16 shows another example of the packaging operation concept. An auto-source code 1603 is created using a control model and the initial value information of the control model 1601 and scaling management information 1602 created by the user. Packaging processing 1604 is executed for the auto-source code 1603 according to packaging information 1603 to create a source file 1605 to be implemented.

Therefore, without changing the control model and the initial value information of the control model, the auto-source code is created under a different condition by changing the scaling management information. Thereafter, without changing the packaging information processing, the source file can be created under a different packaging condition by changing the packaging information.

FIG. 17 shows further another example of the packaging operation concept. Packaging processing 1705 is executed for an auto-source code 1701 created by the user according to scaling management information 1702, initial value information for each condition 1703, and packaging information 1704, to create a source file 1706 to be implemented.

Hence, even if there does not exists the control model, the source file can be created under a different packaging condition by changing the initial values and the packaging information for the packaging.

Hence, the source file can be created after adding initialization processing for initialization when the controller is powered, initialization when the motor is stopped, or initialization when the inverter is stopped in the motor drive system.

The model creation program 31, the model operation program 32, the source code creation program 33, the library model 34, the scaling management 35, and the packaging 36 can conduct data reading and writing operations for the storage 25.

When the built-in controller development tool is employed to develop an apparatus, physical phenomena and operations of the built-in controller can be reproduced. Hence, the apparatus can be produced with high reliability.

When the built-in controller development tool is employed to develop a motor drive system, reactions of the built-in controller to complex behaviors of the motor can be reproduced. It is hence possible to develop a more favorable controller and to develop a motor drive system having high reliability.

The motor drive systems include, for example, a room air conditioner, a package air conditioner, a refrigerator, a cleaner, a pump, an electric car, a fuel cell car, and a hybrid car in which refrigerant is circulated by a motor.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A controller development tool **characterized by** comprising:
interface means (1, 2, 3, 8) for executing a packaging processing to create a source file to be implemented from an auto-source code by using:
a library model (34) configured by a model corresponding to a model operation program (32) and a source code creation program (33);
scaling management means (3B, 35) for managing scaling information for creating a source code with fixed-point or floating-point type;
a plurality of initialization functions (92, 93, 94) for executing initialization processing by using a source code created from the source code creation program (33), the model, the scaling information and initial value information set to the model;
a model update to reflect a control model (82) which indicates an input and output relationship of information between the models based on the library model, the scaling management and the initialization functions;
a source code creation means for creating the auto-source code as an intermediate source code by creating a code based on the control model (82); and
packaging information including path information of the model, the initial value information and storage class information of the library model (34).

2. A controller development tool **characterized by** comprising:
interface means (1, 2, 3, 8) for executing a packaging processing to create a source file to be implemented from an auto-source code by using:
an auto-source code created in advance;
a library model (34) configured by a model corresponding to a model operation program (32) and a source code creation program (33);
scaling management means (3B, 35) for managing scaling information for creating a source code with fixed-point or floating-point type; and
packaging information including path information of the model, the initial value information for each condition and storage class information of the library model (34).

3. The controller development tool according to at least one of the preceding claims, **characterized in that**
an operation window (43) of the model includes a function for selecting presence or absence of a sign for an output signal.

4. The controller development tool according to at least one of the preceding claims, **characterized in that**
an operation window (41, 43, 71) of the model includes a function for setting a scaling name of an output signal.

5. The controller development tool according to at least one of the preceding claims, **characterized in that**
an operation window (41, 43) of the model includes a function for setting scaling of an output signal and an amount of carry for a scaling name of the output signal.

6. The controller development tool according to at least one of the preceding claims, **characterized in that**
an operation window (71) of the model includes a function for selecting a scaling name of an output signal by use of a pulldown menu.

7. The controller development tool according to at least one of the preceding claims, **characterized in that**
an operation window (71) of the model includes a function for displaying a scale value of the selected scaling name of the output signal.

8. The controller development tool according to at least one of the preceding claims, **characterized in that**
an operation window (71) of the model includes a function for setting a scaling name, presence or absence of a sign, a bit length, in particular "16 bits", and a scaling value which are to be set to the model.

9. The controller development tool according to at least one of the preceding claims, **characterized in that**
an operation window of the model includes a function for acquiring a numeric value name, a numeric value, a scale name, a scale value, description information, a storage class, and information of a model path which have been set to the model.

10. The controller development tool according to at least one of the preceding claims, **characterized in that**
the model includes a library model in which blocks capable of creating the source code are combined with each other.

11. A motor drive system developed by use of a controller development tool according to at least one of the preceding claims.

12. An apparatus comprising the motor drive system according to claim 11.

13. A computer system comprising:
- a computer including a CPU (23), an input unit (24), and a storage (25), and
- a controller development tool according to at least one of claims 1 to 10, wherein the computer is configured to run the controller development tool.

14. The computer system according to claim 13, **characterized in that**
information required for simulation and information required for the creation of the source code are separately arranged on an operation window (41) of the library model.

15. A use of a controller development tool according to one of claims 1 to 10 run on a computer or on a computer system according to claim 13 or 14 for the development of a motor drive system.
